# EUROPÄISCHE PATENTSCHRIFT

(11) **EP 0 722 360 B1**
(45) Veröffentlichungstag und Bekanntmachung des Hinweises auf die Patenterteilung: **04.06.1997**
(21) Anmeldenummer: 94928391.5
(22) Anmeldetag: 22.09.1994
(51) Int. Cl.: B01J 20/32, B01J 39/06, B01D 15/08

(54) **IONENAUSTAUSCHER**
ION EXCHANGER
ECHANGEUR D'IONS

(30) Priorität: 04.10.1993 DE 4333821
(43) Veröffentlichungstag der Anmeldung: 24.07.1996
(73) Patentinhaber: MERCK PATENT GmbH, 64293 Darmstadt (DE)
(72) Erfinder: MÜLLER, Egbert, D-64390 Erzhausen (DE); GENSERT, Roland, D-63322 Rödermark (DE); POGUNTKE, Peter, D-64853 Otzberg 5 (DE)
(86) Internationale Anmeldenummer: EP9403168
(87) Internationale Veröffentlichungsnummer: WO9509695

(56) Entgegenhaltungen:
- EP-A- 0 337 144
- EP-A- 0 467 339
- FR-A- 2 631 849
- US-A- 4 332 694
- US-A- 4 908 137
- US-A- 5 135 650
- DATABASE WPI, Week 9336, Derwent Publications Ltd., London (GB); AN 93-285445

## Beschreibung

Die Erfindung betrifft Trennmaterialien für die Ionenaustauschchromatographie.

Für die Ionenaustauschchromatographie insbesondere von Makromolekülen biologischen Ursprungs (Biopolymere) sind aus DE 38 11 042 ionische Pfropfpolymere bekannt, bei denen alle Monomereinheiten die jeweiligen ionischen Strukturelemente aufweisen. Trotz der im allgemeinen hervorragenden Eigenschaften dieser Ionenaustauscher, wurde bei einzelnen Anwendungen gefunden, daß einzelne Analytbanden nur unzureichend getrennt waren. Aufgabe der vorliegenden Erfindung ist es, Trennmaterialien mit verbesserten Eigenschaften bereitzustellen.

Aus der Anmeldung DE 43 10 964 sind oxiranhaltige aktivierte Trägermaterialien bekannt, bei denen Monomere der Formel I auf einen hydroxylgruppenhaltigen Basisträger aufgepfropft sind, 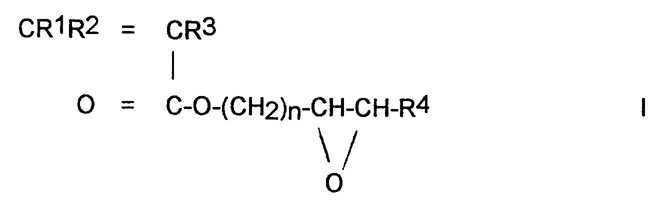 worin
R¹, R² und R³ unabhängig voneinander
H oder CH₃,
R⁴ H, C₁-C₅-Alkyl oder C₆-C₁₂-Aryl
und
n eine ganze Zahl zwischen 1 und 5
bedeuten.

Es wurde gefunden, daß sich diese aktivierten Trägermaterialien in an sich bekannter Weise zu Trennmaterialien für die Ionenaustauschchromatographie umsetzen lassen. Die resultierenden Trennmaterialien weisen verbesserte Eigenschaften auf.

Gegenstand der Erfindung sind somit Trennmaterialien für die Ionenaustauschchromatographie auf der Grundlage von hydroxylgruppenhaltigen Basisträgern, auf deren Oberflächen Polymere kovalent gebunden sind, dadurch gekennzeichnet, daß
a) der Basisträger aliphatische Hydroxylgruppen enthält,
b) die kovalentgebundenen Polymeren über eine endständige Monomereinheit an den Basisträger gebunden sind,
c) die Polymeren sowohl Monomereinheiten der Formel II als auch der Formel III enthalten,
d) die Monomereinheiten linear verknüpft sind, 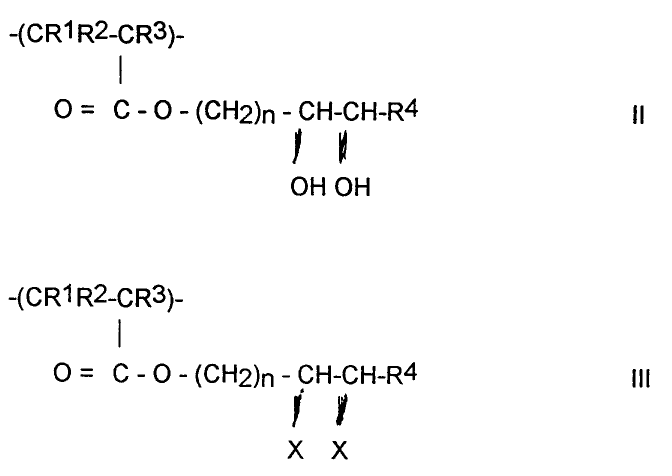
worin
R¹, R² und R³ unabhängig voneinander
H oder CH₃,
R⁴ H, C₁-C₅-Alkyl oder C₆-C₁₂-Aryl,
n eine ganze Zahl zwischen 1 und 5,
ein Rest X OH und der andere Rest X NR⁵R⁶, N⁺R⁵R⁶R⁷ oder SO₃H und
R⁵, R⁶ und R⁷ unabhängig voneinander
C₁-C₄-Alkyl, wobei einer oder beide Reste R⁵ und/oder R⁶ auch H sein können,
bedeuten.

Gegenstand der Erfindung ist die Verwendung der erfindungsgemäßen Trennmaterialien bei der Trennung von Gemischen mindestens zweier Substanzen, insbesondere zur Trennung von Biopolymeren, mittels Ionenaustauschchromatographie.

Gegenstand der Erfindung sind auch Verfahren zur Herstellung von Trennmaterialien für die Ionenaustauschchromatographie, dadurch gekennzeichnet, daß aus DE 43 10 964 bekannte oxiranhaltige aktivierte Trägermaterialien mit schwefliger Säure oder ihren Salzen oder mit primären, sekundären oder tertiären Aminen der Formel IV

NR⁵R⁶R⁷ IV

umgesetzt werden, worin
R⁵, R⁶ und R⁷ unabhängig voneinander
C₁-C₄-Alkyl, wobei einer oder zwei dieser Reste auch H sein können,
bedeuten.

Gegenstand der Erfindung sind Verfahren zur Trennung von Gemischen mindestens zweier Substanzen, insbesondere zur Trennung von Biopolymeren, mittels Ionenaustauschchromatographie unter Verwendung der erfindungsgemäßen Trennmaterialien.

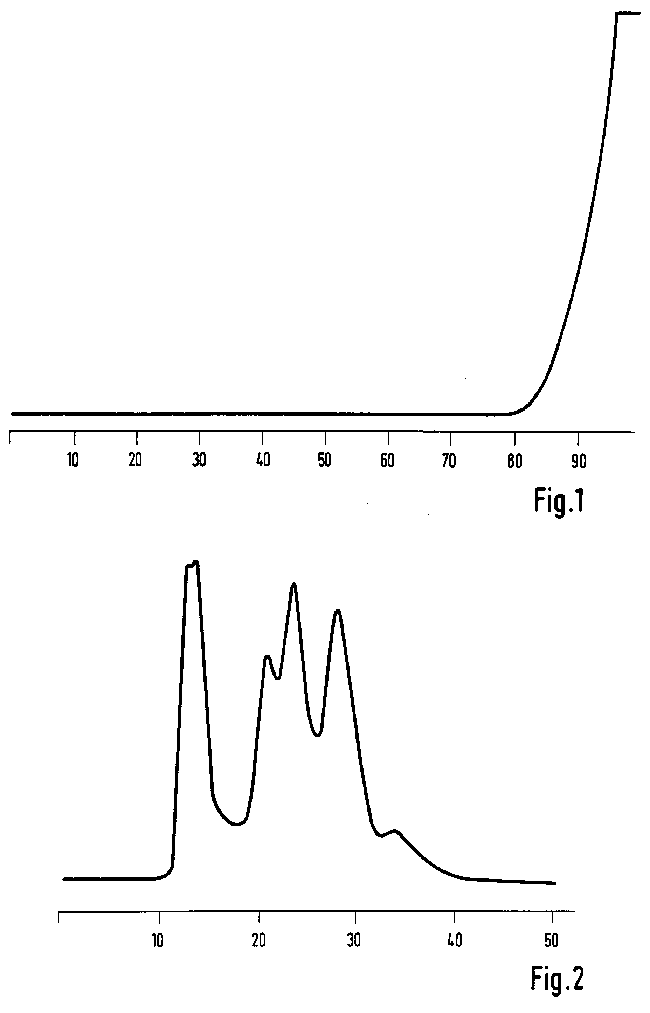

Abbildung 1 stellt eine Elutionskurve (Durchbruchkurve) dar; experimentelle Einzelheiten finden sich in Anwendungsbeispiel A. Abbildung 2 stellt eine Elutionskurve einer chromatographischen Trennung von humanem Serumalbumin, Ovalbumin und Conalbumin dar; experimentelle Einzelheiten finden sich in Anwendungsbeispiel C.

Erfindungsgemäß können für die Herstellung von Kationenaustauschern mit Sulfonylgruppen schwefelige Säure oder ihre Salze verwendet werden. Für die Herstellung von Anionenaustauschern können primäre, sekundäre oder tertiäre Alkylamine mit 1 - 4 C-Atomen in der oder den Alkylkette(n) verwendet werden. Folglich können die Reste R⁵, R⁶ und R⁷ jeweils unabhängig voneinander Methyl, Ethyl, Propyl, iso-Propyl, n-Butyl, iso-Butyl oder tert.-Butyl bedeuten, wobei ein oder zwei dieser Reste auch Wasserstoff bedeuten können. Somit können beispielsweise für die Herstellung von Anionenaustauschern mit Aminogruppen Methylamin, Dimethylamin, Ethylamin, Diethylamin, Ethylmethylamin, Propylamin, Dipropylamin oder Methylpropylamin verwendet werden. Bevorzugt werden Dimethyl- oder Diethylamin verwandt. Für die Herstellung von Anionenaustauschern mit quaternären Ammoniumgruppen können beispielsweise Trimethylamin, Triethylamin, Ethyldimethylamin oder Diethylmethylamin verwendet werden, wobei die Verwendung von Trimethylamin bevorzugt ist.

Die genannten Verbindungen reagieren mit dem Oxiransystem, wobei bei Verwendung von schwefliger Säure oder ihren Verbindungen sulfonierte Kationenaustauscher entstehen. Bei der Verwendung von primären oder sekundären Aminen entstehen Anionenaustauscher mit Aminogruppen, bei der Verwendung von tertiären Aminen Anionenaustauscher mit quaternären Ammoniumgruppen. Überschüssige Oxirangruppen werden mit verdünnter Schwefelsäure zu Diolgruppen hydrolysiert. Die genannten ionischen Monomereinheiten der Formel III sind zu 5 bis 50 Molprozent, bevorzugt zwischen 10 und 30 Molprozent enthalten; die übrigen Monomereinheiten besitzen die Diolstruktur nach Formel II. Die Beladungsdichte läßt sich durch die Wahl der Konzentration der Reaktionspartner, d.h. der schwefligen Säure beziehungsweise der Amine, einstellen.

Auch ohne weitere Ausführungen wird davon ausgegangen, daß ein Fachmann die obige Beschreibung in weitesten Umfang nutzen kann. Die bevorzugten Ausführungsformen sind deswegen lediglich als beschreibende, keineswegs als in irgendeine Weise limitierende Offenbarung aufzufassen.

Die folgenden Beispiele sollen den Gegenstand näher erläutern; diese Beispiele stellen keine Einschränkung des Erfindungsgegenstandes dar.

### Beispiele

Die folgenden Reaktionen werden in einem 500 ml Dreihalskolben mit Rührer ausgeführt. Die Suspensionen werden durch Filtration auf einer Glasfritte (G2) gewaschen.

### Beispiel 1: Herstellung eines oxiran-akivierten Trägers ausgehend von Fractogel®-TSK HW 65 (S)

Zu einer Suspension aus 100 ml sedimentiertem Fractogel®-TSK HW 65 (S) und 66 ml Wasser werden mit 3 g Ammoniumcer(IV)nitrat (gelöst in einer Mischung aus 180 ml Wasser und 3 g HNO₃ (65%)) bei Raumtemperatur unter starkem Rühren vermischt. Nach 1 Minute erfolgt die Zugabe einer Lösung von 6 g (2,3-Epoxypropyl)-methacrylat in 44 ml Dioxan. Es wird eine Stunde weitergerührt. Anschließend wird das Reaktionsprodukt zweimal mit je 200 ml Wasser gewaschen.

### Beispiel 2: Synthese eines mit Diethylamin substituierten Trägermaterials

100 g abfiltriertes Gel hergestellt nach Beispiel 1 werden in 100 ml Wasser suspendiert und 100 ml Diethylamin zugegeben. Anschließend wird 20 Stunden bei Raumtemperatur weitergerührt. Danach wird das Reaktionsprodukt zweimal mit je 100 ml Wasser gewaschen.

Das gewaschene Reaktionsprodukt wird in 100 ml einer 0.5 M Schwefelsäurelösung suspendiert und zwei Stunden bei 40 °C langsam gerührt. Danach wird mit 0,25 M Phosphatpuffer (pH 7) bis zum Neutralpunkt, anschließend mit Wasser gewaschen. Das Gel wird in wäßriger Suspension unter Zusatz von 0,02 % Natriumazid gelagert.

Der resultierende DEA-Anionenaustauscher weist eine Kapazität von 160 mg Rinderserumalbumin/ml Gel auf.

### Beispiel 3: Synthese eines mit Trimethylamin substituierten Trägermaterials

Die Herstellung erfolgt wie in Beispiel 2 beschrieben, wobei statt des Diethylamins 100 ml wäßrige Trimethylaminlösung (30 %) eingesetzt werden.

Der resultierende quaternäre Anionenaustauscher weist eine Kapazität von 130 mg Rinderserumalbumin/ml Gel auf.

### Beispiel 4: Synthese eines sulfonierten Trägermaterials

100 g abfiltriertes Gel hergestellt nach Beispiel 1 werden in einer Lösung von Na₂SO₃ (100 g/l) in Natriumphosphatpuffer 20 g/l; pH 8) suspendiert und bei 60 °C drei Stunden gerührt. Danach wird das Reaktionsprodukt zweimal mit je 100 ml Wasser gewaschen.

Das gewaschene Reaktionsprodukt wird in 100 ml einer 0.5 M Schwefelsäurelösung suspendiert und zwei Stunden bei 40 °C langsam gerührt. Danach wird mit 0,25 M Phosphatpuffer (pH 7) bis zum Neutralpunkt, anschließend mit Wasser gewaschen. Das Gel wird in wäßriger Suspension unter Zusatz von 0,02 % Natriumazid gelagert.

### Anwendungsbeispiel A: Ermittlung der Bindungskapazität mit Rinderserumalbumin (Durchbruchkurve)

Trägermaterial, hergestellt nach Beispiel 2, wird in eine SuperFormance® Glassäule (50 x 10 mm) gefüllt und mit dem Auftragepuffer (50 mM TRIS-Puffer, pH 8,3) äquilibriert. Eine Lösung von Rinderserumalbumin (10 mg/ml) in diesem Puffer wird kontinuierlich aufgetragen (Fluß: 0,5 ml/min) und das Elutionsdiagramm durch Photometrie bei 280 nm gemessen. Aus der Durchbruchskurve wird die Kapazität bestimmt.

Es wird eine steile Durchbruchskurve gefunden; die Kapazitätsberechnung ergibt 158 mg Rinderserumalbumin/ml Gel (siehe Abbildung 1).

### Anwendungsbeispiel B: Ermittlung der Bindungskapazität mit Rinderserumalbumin nach Behandlung mit 1 M NaOH

Je 10 ml Trägermaterial, hergestellt nach Beispiel 3, werden in je 40 ml 1 M NaOH suspendiert und im Wasserbad unter gelegentlichem Schütteln zwei Stunden erwärmt (40, 50 und 60 °C). Anschließend werden die Proben in 50 mM TRIS-Puffer (pH 8,3) suspendiert. Die Bindungskapazität wird wie in Anwendungsbeispiel A beschrieben bestimmt:

| Behandlung: | Kontrolle | 40 °C | 50 °C | 60 °C |
|---|---|---|---|---|
| Bindungskapazität (mg/ BSA/ml) | 84,7 | 105,7 | 84,4 | 73,3 |

### Anwendungsbeispiel C: Trennung von humanem Serumalbumin, Ovalbumin und Conalbumin

Trägermaterial, hergestellt nach Beispiel 2, wird in eine SuperFormance® Glassäule (50 x 10 mm) gefüllt und mit dem Auftragepuffer (20 mM TRIS-Puffer, pH 8,0) äquilibriert. Eine Mischung enthaltend humanes Serumalbumin, Ovalbumin und Conalbumin (je 4 mg/ml) wird aufgetragen (200 µl). Eluiert wird bei einem Fluß von 1 ml/min mit einem Gradienten von 0 bis 1,0 M NaCl in 20 mM TRIS-Puffer, pH 8,0 (Dauer 100 Minuten). Das Elutionsdiagramm wird durch Photometrie bei 280 nm gemessen.

Die drei Proteine werden vollständig getrennt (siehe Abbildung 2).

## Patentansprüche

1. Trennmaterialien für die Ionenaustauschchromatographie auf der Grundlage von hydroxylgruppenhaltigen Basisträgern, auf deren Oberflächen Polymere kovalent gebunden sind, dadurch gekennzeichnet, daß
a) der Basisträger aliphatische Hydroxylgruppen enthält,
b) die kovalentgebundenen Polymeren über eine endständige Monomereinheit an den Basisträger gebunden sind,
c) die Polymeren sowohl Monomereinheiten der Formel II als auch der Formel III enthalten,
d) die Monomereinheiten linear verknüpft sind, 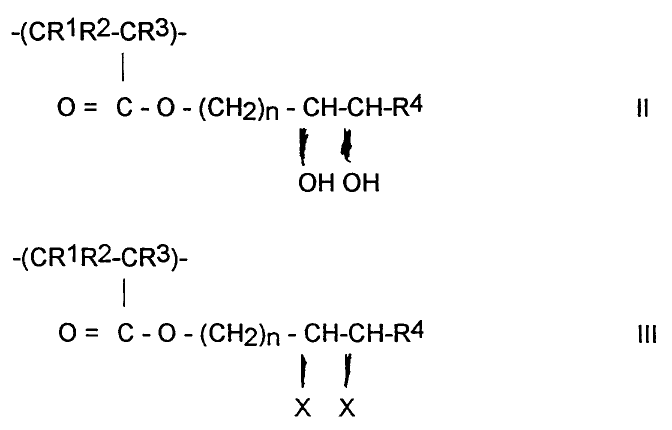
worin
R¹, R² und R³ unabhängig voneinander
H oder CH₃,
R⁴ H, C₁-C₅-Alkyl oder C₆-C₁₂-Aryl,
n eine ganze Zahl zwischen 1 und 5,
ein Rest X OH und der andere Rest X NR⁵R⁶, N⁺R⁵R⁶R⁷ oder SO₃H
und
R⁵, R⁶ und R⁷ unabhängig voneinander
C₁-C₄-Alkyl, wobei einer oder beide Reste R⁵ und/oder R⁶ auch H sein können,
bedeuten.

2. Verwendung von Trennmaterialien mit den Merkmalen von Anspruch 1 bei der Trennung von Gemischen mindestens zweier Substanzen, insbesondere zur Trennung von Biopolymeren, mittels Ionenaustauschchromatographie.

3. Verfahren zur Herstellung von Trennmaterialien für die Ionenaustauschchromatographie, dadurch gekennzeichnet, daß oxiranhaltige aktivierte Trägermaterialien, bei denen Monomere der Formel I auf einen hydroxylgruppenhaltigen Basisträger aufgepfropft sind, 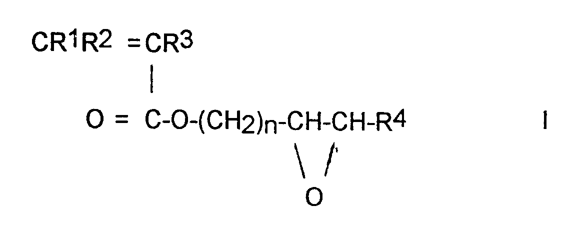 worin
R¹, R² und R³ unabhängig voneinander
H oder CH₃,
R⁴ H, C₁-C₅-Alkyl oder C₆-C₁₂-Aryl
und
n eine ganze Zahl zwischen 1 und 5
bedeuten, mit schwefliger Säure oder ihren Salzen oder mit primären, sekundären oder tertiären Aminen der Formel IV,
NR⁵R⁶R⁷ IV
worin
R⁵, R⁶ und R⁷ unabhängig voneinander
C₁-C₄-Alkyl, wobei einer oder zwei dieser Reste auch H sein können,
bedeuten, umgesetzt werden.

4. Verfahren zur Trennung von Gemischen mindestens zweier Substanzen, insbesondere zur Trennung von Biopolymeren, mittels Ionenaustauschchromatographie unter Verwendung von Trennmaterialien mit den Merkmalen von Anspruch 1.

## Claims

1. Separation materials for ion exchange chromatography which are based on hydroxyl-containing base supports on whose surfaces polymers are covalently bonded, characterized in that
a) the base support contains aliphatic hydroxyl groups,
b) the covalently bonded polymers are bonded to the base support via a terminal monomer unit,
c) the polymers contain monomer units of both the formula II and the formula III,
d) the monomer units are linked linearly, 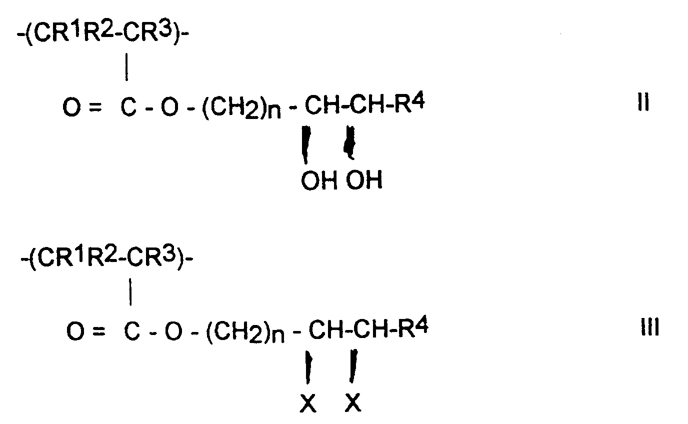
in which
R¹, R² and R³ independently of one another are H or CH₃,
R⁴ is H, C₁-C₅-alkyl or C₆-C₁₂-aryl,
n is an integer between 1 and 5,
one radical X is OH and the other radical X is NR⁵R⁶, N⁺R⁵R⁶R⁷ or SO₃H,
and
R⁵, R⁶ and R⁷ independently of one another are C₁-C₄-alkyl, it also being possible for one or both radicals R⁵ and/or R⁶ to be H.

2. Use of separation materials having the features of claim 1 in the separation of mixtures of at least two substances, in particular for the separation of biopolymers, by ion exchange chromatography.

3. Process for the preparation of separation materials for ion exchange chromatography, characterized in that oxirane-containing activated support materials in which monomers of the formula I are grafted onto a hydroxyl-containing base support 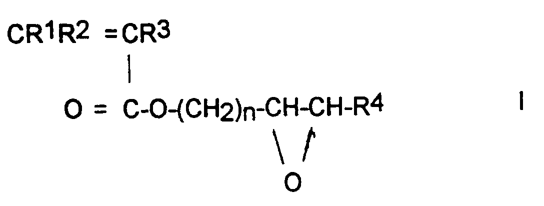 in which
R¹, R² and R³ independently of one another are H or CH₃,
R⁴ is H, C₁-C₅-alkyl or C₆-C₁₂-aryl
and
n is an integer between 1 and 5,
are reacted with sulfurous acid or its salts or with primary, secondary or tertiary amines of the formula IV
NR⁵R⁶R⁷ IV
in which
R⁵, R⁶ and R⁷ independently of one another are C₁-C₄-alkyl, it also being possible for one or two of these radicals to be H.

4. Method of separating mixtures of at least two substances, in particular for the separation of biopolymers, by ion exchange chromatography using separation materials having the features of claim 1.

## Revendications

1. Matériaux de séparation pour chromatographie d'échange d'ions, à base de supports de base contenant des groupes hydroxyle sur les surfaces desquels des polymères sont liés par covalence, caractérisés en ce que
a) le support de base contient des groupes hydroxyle, aliphatiques,
b) les polymères liés par covalence sont liés au support de base par l'intermédiaire d'un motif monomère terminal,
c) les polymères contiennent des motifs monomères de formule II et de formule III,
d) les motifs monomères sont liés linéairement, 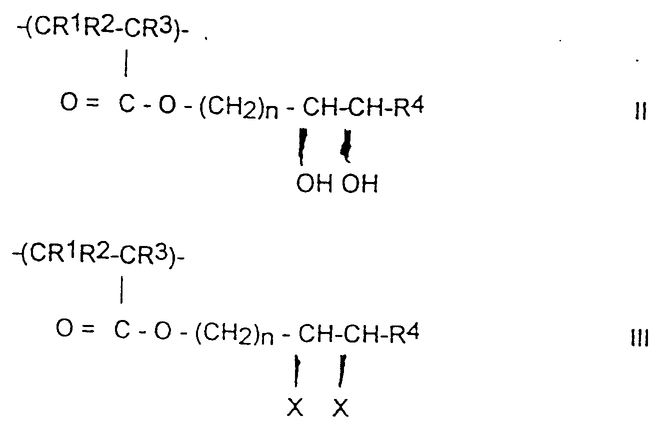
formules dans lesquelles
R¹, R² et R³, indépendamment les uns des autres, sont H ou CH₃,
R⁴ est H, un groupe alkyle en C₁-C₅ ou aryle en C₆-C₁₂,
n est un nombre entier entre 1 et 5,
un radical X est OH et l'autre radical X est NR⁵R⁶, N⁺R⁵R⁶R⁷ ou SO₃H,
et
R⁵, R⁶ et R⁷, indépendamment les uns des autres, sont des groupes alkyle en C₁-C₄, avec la possibilité pour l'un des radicaux R⁵ et R⁶, ou les deux, d'être H.

2. Utilisation de matériaux de séparation ayant les caractéristiques de la revendication 1 dans la séparation de mélanges d'au moins deux substances, en particulier pour la séparation de biopolymères, par chromatographie d'échange d'ions.

3. Procédé de préparation de matériaux de séparation pour chromatographie d'échange d'ions, caractérisé en ce que l'on fait réagir des matériaux de support activés contenant des groupes oxirane dans lesquels des monomères de formule I sont greffés sur un support de base contenant des groupes hydroxyle 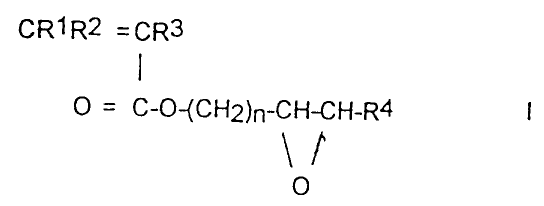 formule dans laquelle
R¹, R² et R³, indépendamment les uns des autres, sont H ou CH₃,
R⁴ est H, un groupe alkyle en C₁-C₅ ou aryle en C₆-C₁₂,
et
n est un nombre entier entre 1 et 5,
avec de l'acide sulfureux ou ses sels ou avec des amines primaires, secondaires ou tertiaires de formule IV
NR⁵R⁶R⁷ IV
dans laquelle
R⁵, R⁶ et R⁷, indépendamment les uns des autres, sont des groupes alkyle en C₁-C₄, avec la possibilité pour l'un de ces radicaux R⁵ et R⁶, ou les deux, d'être H.

4. Procédé de séparation de mélanges d'au moins deux substances, en particulier pour la séparation de biopolymères, par chromatographie d'échange d'ions, à l'aide de matériaux de séparation ayant les caractéristiques de la revendication 1.
